(19) **Europäisches Patentamt / European Patent Office / Office européen des brevets**

(11) **EP 4 769 564 A1**

(12) **EUROPEAN PATENT APPLICATION**
published in accordance with Art. 153(4) EPC

(43) Date of publication:
01.07.2026 Bulletin 2026/27

(21) Application number: 24889094.9

(22) Date of filing: 05.11.2024

(51) International Patent Classification (IPC):
$H01M\ 4/525^{(2010.01)}$      $H01M\ 4/505^{(2010.01)}$
$C01G\ 53/00^{(2025.01)}$      $H01M\ 4/131^{(2010.01)}$
$H01M\ 10/052^{(2010.01)}$      $H01M\ 4/02^{(2006.01)}$

(52) Cooperative Patent Classification (CPC):
C01G 53/00; H01M 4/02; H01M 4/131; H01M 4/505;
H01M 4/525; H01M 10/052; Y02E 60/10

(86) International application number:
PCT/KR2024/017317

(87) International publication number:
WO 2025/100907 (15.05.2025 Gazette 2025/20)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 08.11.2023 KR 20230154027
04.11.2024 KR 20240154763

(71) Applicant: LG ENERGY SOLUTION, LTD.
Seoul 07335 (KR)

(72) Inventors:
• Yu, Jun Woo
Daejeon 34122 (KR)

• Kim, Ji Hye
Daejeon 34122 (KR)
• Heo, Jong Wook
Daejeon 34122 (KR)
• Jeong, Mi Hee
Daejeon 34122 (KR)
• Yun, So Yeong
Daejeon 34122 (KR)
• Park, Byung Chun
Daejeon 34122 (KR)

(74) Representative: Hoffmann Eitle
Patent- und Rechtsanwälte PartmbB
Arabellastraße 30
81925 München (DE)

(54) **POSITIVE ELECTRODE ACTIVE MATERIAL AND METHOD FOR PRODUCING POSITIVE ELECTRODE ACTIVE MATERIAL**

(57) The present invention relates to: a positive electrode active material comprising a single particle-type lithium transition metal oxide having a nickel content of 80 mol% or more among metals excluding lithium and consisting of 1 to 30 nodules, wherein a cation mixing ratio satisfies a specific formula; and a method for producing same, the method comprising: a first step of preparing a mixture by mixing an anhydrous lithium raw material and a transition metal precursor oxide having a nickel content of 80 mol% or more among the total metals; and a second step of preparing a single particle-type lithium transition metal oxide consisting of 1 to 30 nodules by sintering the mixture, wherein the ratio of the $D_{50}$ of the anhydrous lithium raw material to the $D_{50}$ of the transition metal precursor oxide is 4 to 20.

[FIG. 1]

5.0kV 8.6mm x10.0k SE(M)          5.00um

Processed by Luminess, 75001 PARIS (FR)

**Description**

**TECHNICALFIELD**

This application claims priority to Korean Patent Application Nos. 10-2023-0154027, filed on November 8, 2023, and 10-2024-0154763, filed on November 4, 2024, the disclosures of which are incorporated herein in their entirety.
The present invention relates to a positive electrode active material in which the orientation of primary particles is controlled, a preparation method thereof, and a positive electrode and a lithium secondary battery including the positive electrode active material.

**BACKGROUND ART**

Recently, the demand for a small and lightweight secondary battery having a relatively high capacity is rapidly increased due to the rapid spread of electronic devices using batteries, such as cell phones, notebook computers, electric vehicles, and the like. Particularly, a lithium secondary battery is lightweight and has a high energy density, and thus, is attracting attention as a driving power source for portable devices. Therefore, research and development efforts for improving the performance of a lithium secondary battery have been actively conducted.
A lithium secondary battery generates electric energy by an oxidation and reduction reaction when lithium ions are intercalated/deintercalated from a positive electrode and the a negative electrode when an organic electrolyte or a polymer electrolyte is charged between the positive electrode and the negative electrode made of active materials capable of intercalation and deintercalation of lithium ions.
As a positive electrode active material of a lithium secondary battery, a lithium cobalt oxide ($LiCoO_2$), a lithium nickel oxide ($LiNiO_2$), a lithium manganese oxide ($LiMnO_2$, $LiMn_2O_4$, or the like), a lithium iron phosphate compound ($LiFePO_4$), and the like have been mainly used. Meanwhile, as a method for improving the thermal stability of $LiNiO_2$, which has a low thermal stability, while maintaining the excellent reversible capacity thereof, a lithium composite metal oxide (hereinafter, simply referred to as an 'NCM oxide') in which a part of nickel is substituted with cobalt and manganese has been developed. However, a typical NCM oxide which has been developed does not have sufficient capacity properties, so that there has been a limitation in the application thereof.
In order to overcome the above-described limitation, in recent year, research has been conducted to increase the content of Ni in an NCM oxide. However, a high-Ni positive electrode active material having a high nickel content has problems in that a large amount of gas is generated during charging and discharging due to high reactivity of nickel, and a lattice structure is significantly unstable and the content of lithium impurities remaining on the surface increases due to cation mixing and oxygen deintercalation.
Therefore, there is a need to develop a positive electrode material including a high content of nickel, thereby having excellent capacity and at the same time, securing structural stability.

**DISCLOSURE OF THE INVENTION**

**TECHNICAL PROBLEM**

The present invention is to provide a high-nickel positive electrode active material in the form of a single particle in which a crystal strain and a cation mixing rate are controlled within predetermined conditions, and a method for preparing the positive electrode active material.

**TECHNICALSOLUTION**

[1] The present invention provides a positive electrode active material including a single-particle-type lithium transition metal oxide, which has a nickel content of 80 mol% or greater among metals excluding lithium and is composed of 1 to 30 nodules, wherein a cation mixing rate (P) of the positive electrode active material satisfies Equation 1 below.

[Equation 1]

$$P \leq \frac{-6X + 1{,}020}{S}$$

In Equation 1 above, P is a cation mixing rate value of the positive electrode active material, and X is a value of the content of nickel among metals excluding lithium in the lithium transition metal oxide, wherein the cation mixing rate is measured in a unit of at%, and the content of nickel is measured in a unit of mol%, but P and X are unitless numbers without units, and S is a value obtained by multiplying a crystal strain by $10^6$.

[2] In [1] above, the present invention provides a positive electrode active material, wherein the positive electrode active material has a $D_{50}$ of 3.0 μm to 6.0 μm.

[3] In [1] or [2] above, the present invention provides a positive electrode active material, wherein the lithium transition metal oxide has a composition of Formula 1 below.

[Formula 1]     $Li_{1+x}(Ni_aCo_bM^1_cM^2_d)O_2$

In Formula 1 above, $M^1$ is Mn, Al, or a combination thereof, $M^2$ is one or more selected from the group consisting of W, Cu, Fe, V, Cr, Ti, Zr, Zn, In, Ta, Y, La, Sr, Ga, Sc, Gd, Sm, Ca, Ce, Nb, Mg, B, and Mo, and $0 \leq x \leq 0.50$, $0.80 \leq a \leq 1$, $0 \leq b \leq 0.20$, $0 \leq c \leq 0.20$, $0 \leq d \leq 0.10$, and $a+b+c+d=1$.

[4] In [1] to [3] above, the present invention provides a positive electrode active material, wherein the positive electrode active material has a cation mixing rate of 2.0 at% or less.

[5] In [1] to [4] above, the present invention provides a positive electrode active material, wherein, when the positive electrode active material is pressed with a force of 12 tons, a generation rate of fine particles having a particle diameter of 1 μm or less is 2.0 vol% or less with respect to the total volume of the positive electrode active material.

[6] In [1] to [5] above, the present invention provides a positive electrode active material, wherein the positive electrode active material has a single-particleization of 3.0 to 4.5 according to Equation 2 below.

[Equation 2]

$$\frac{\sum_{i=1}^{n} \frac{4\pi}{3} \times R_i^3}{n}$$

In Equation 2 above, $R_i$ is a half-diameter value of an i-th grain as measured by ion-milling an electrode manufactured by applying the positive electrode active material, and then analyzing the electrode by electron backscatter diffraction (EBSD), wherein the half-diameter of the grain is measured in a unit of μm, but the $R_i$ is a unitless number without a unit, and n is the total number of grains as measured by the EBSD analysis, which 350 to 450.

[7] In [1] to [6] above, the present invention provides a positive electrode active material, wherein the positive electrode active material includes LiOH and $Li_2CO_3$ on the surface of a particle, and the total weight of the LiOH and the $Li_2CO_3$ based on the total weight of the positive electrode active material is 0.50 wt% or less.

[8] The present invention relates to a method for preparing a positive electrode active material, the method including a first step of mixing a transition metal precursor oxide having a nickel content of 80 mol% or greater among all metals with an anhydrous lithium raw material to prepare a mixture, and a second step of firing the mixture to prepare a single-particle-type lithium transition metal oxide composed of 1 to 30 nodules, wherein a ratio of a $D_{50}$ of the anhydrous lithium raw material to a $D_{50}$ of the transition metal precursor oxide is 4 to 20.

[9] In [8] above, the present invention provides a method for preparing a positive electrode active material, wherein the transition metal precursor oxide has a composition of Formula 2 below.

[Formula 2]     $Ni_{a1}Co_{b1}M^1_{c1}M^2_{d1}O$

In Formula 2 above, $M^1$ is Mn, Al, or a combination thereof, $M^2$ is one or more selected from the group consisting of W, Cu, Fe, V, Cr, Ti, Zr, Zn, In, Ta, Y, La, Sr, Ga, Sc, Gd, Sm, Ca, Ce, Nb, Mg, B, and Mo, and $0.80 \leq a1 \leq 1$, $0 \leq b1 \leq 0.20$, $0 \leq c1 \leq 0.20$, $0 \leq d1 \leq 0.10$, and $a1+b1+c1+d1=1$.

[10] In [8] or [9] above, the present invention provides a method for preparing a positive electrode active material, wherein the transition metal precursor oxide has a $D_{50}$ of 3 $\mu$m to 6 $\mu$m.

[11] In at least one among [8] to [10] above, the present invention provides a method for preparing a positive electrode active material, wherein the anhydrous lithium raw material has a $D_{50}$ of 12 $\mu$m to 60 $\mu$m.

[12] In at least one among [8] to [11] above, the present invention provides a method for preparing a positive electrode active material, wherein the firing of the second step is performed at 650 °C to 900 °C.

[13] In at least one among [8] to [12] above, the present invention provides a method for preparing a positive electrode active material, wherein a raw material loss rate according to Equation 3 below is 5 wt% or less.

[Equation 3] [1-{Weight of prepared lithium transition metal oxide/(Input weight of transition metal precursor oxide+Input weight of anhydrous lithium raw material)}] $\times$ 100 (%)    [Equation 3]

[14] The present invention provides a positive electrode including at least one the positive electrode active materials among [1] to [7] above.

[15] The present invention provides a lithium secondary battery including the positive electrode according to [14] above, a negative electrode including a negative electrode active material, a separator interposed between the positive electrode and the negative electrode, and an electrolyte.

## ADVANTAGEOUS EFFECTS

A positive electrode active material according to the present invention exhibits a low crystal strain, that is, a stable structure, and thus, has an advantage in that the structural deformation is reduced, and the consequent electrode deterioration is reduced during a roll-pressing process or battery driving.

In addition, the positive electrode active material has a low cation mixing rate, and thus, has an advantage in that the irreversible capacity is small and the charging and discharging efficiency is excellent.

In addition, the positive electrode active material includes a single-particle-type lithium transition metal oxide, and thus, has excellent particle strength, thereby having reduced particle breakage during roll-pressing, so that there is an effect of preventing problems, such as a side reaction with an electrolyte solution due to the particle breakage, and consequent gas generation.

In addition, the lithium transition metal oxide contains a high content of nickel, and thus, has an advantage of being capable of implementing a high capacity.

In addition, in the present invention, an oxide precursor is used instead of a typical hydroxide precursor as a precursor when synthesizing a positive electrode active material, so that it is possible to increase a reaction yield, reduce raw material loss, and lower a firing temperature.

In addition, in the present invention, an anhydrous material is used instead of a typical hydrate as a lithium raw material when synthesizing a positive electrode active material, so that it is possible to reduce an amount of lithium raw material used, lower a firing temperature, and prevent degradation in the quality of the positive electrode active material.

In addition, in the present invention, a ratio of a $D_{50}$ of the anhydrous lithium raw material to a $D_{50}$ of a precursor oxide is controlled to be within a predetermined range when synthesizing a positive electrode active material, so that there is an effect of improving uniformity of a reaction between a precursor and the lithium raw material.

## BRIEF DESCRIPTION OF THE DRAWINGS

FIG. 1 is a photograph of positive electrode active material particles prepared in Example 1 observed through scanning electron microscope (SEM).

FIG. 2 is a photograph of positive electrode active material particles prepared in Example 2 observed through scanning electron microscope (SEM).

FIG. 3 is a photograph of positive electrode active material particles prepared in Comparative Example 1 observed through scanning electron microscope (SEM).

FIG. 4 is a photograph of positive electrode active material particles prepared in Comparative Example 2 observed through scanning electron microscope (SEM).

FIG. 5 is a photograph of positive electrode active material particles prepared in Comparative Example 3 observed through scanning electron microscope (SEM).

FIG. 6 is a photograph of positive electrode active material particles prepared in Comparative Example 4 observed through scanning electron microscope (SEM).

FIG. 7 is a photograph of positive electrode active material particles prepared in Comparative Example 5 observed through scanning electron microscope (SEM).

## BEST MDOE FOR CARRYING OUT THE INVENTION

Hereinafter, the present invention will be described in more detail to facilitate understanding of the present invention.

In the present invention, the term "single-particle-type" refers to a particle composed of 30 or fewer nodules, and is a concept including a single particle composed of one nodule and a quasi-single particle, which is a composite of 2 to 30 nodules.

The "nodule" is a sub-particle unit constituting a single particle and a quasi-single particle, and may be a single crystal with no crystalline grain boundaries, or a polycrystal with no grain boundaries in appearance when observed with a field of view of 5000 to 20000 times using a scanning electron microscope.

In the present invention, the "particle" is a concept including any one or all of a single particle, a quasi-single particle, a primary particle, and a nodule.

In the present invention, the "$D_{50}$" refers to a particle diameter corresponding to 50% of a cumulative volume in a volume cumulative particle size distribution of corresponding particle powder, and may be measured by using a laser diffraction method. For example, the D50 may be measured by dispersing positive electrode active material powder in a dispersion medium, and then introducing the mixture into a commercially available laser diffraction particle size measurement device (e.g., Malvern Co., Ltd., Mastersizer 3000) to be irradiated with an ultrasonic wave of about 28 kHz to an output of 60W, thereby obtaining a volume cumulative particle size distribution graph, and then obtaining a particle diameter at a point at which the cumulative volume is 50% in the obtained volume cumulative particle size distribution graph.

In the present invention, the "cation mixing rate" refers to a ratio (at%) of nickel ions ($Ni^{2+}$) mixed in based on the total amount of lithium sites in a lithium layer of a lithium nickel-based oxide having a layered structure, and may be measured through X-ray diffraction analysis (XRD).

In the present invention, the "at%" refers to an atomic percentage.

In the present invention, the "crystal strain" is a value representing distortion of a lattice caused by a defect, i.e., the degree of deformation of a crystal lattice, and is a dimensionless number, and may be measured through performing a Rietveld refinement analysis on X-ray diffraction data.

The X-ray diffraction analysis may be performed by, using Bruker D8 Endeavor (light source: Cu-K$\alpha$, $\lambda$=1.54 Å) equipped with a LynxEye XE-T-position sensitive detector, placing a sample into a groove of a general powder holder, and then evenly leveling the surface of the sample using a slide glass, followed by filling the groove with the sample such that the height of the sample is the same as the height of the edge of the holder, under the conditions of step size=0.02° and total scan time=about 20 minutes for a FDS 0.5°and 2$\theta$=15° to 90° region. The Rietveld refinement is performed on the measured data in consideration of charge (+3 for metals in transition metal sites, and +2 for Ni in Li sites) and cation mixing in each site. For instrumental broadening during the analysis, Fundamental Parameter Approach (FPA) implemented in the Bruker TOPAS program is used, and during fitting, all peaks in a measurement range are used. A peak shape is fitted using only the Lorenzian contribution as the First Principle (FP) among peak types available in the TOPAS.

In the present invention, the "grain" is a particle unit having the same crystal orientation, and is a minimum particle unit recognized as a single mass in an electron backscatter diffraction (EBSD) map image. The size of the grain may be measured by analyzing the EBSD map.

## Positive electrode active material

As described above, if the content of nickel included in a positive electrode active material is increased, it is possible to secure a high capacity, but there is a problem in that structural stability is degraded. Specifically, a high-nickel positive electrode active material has a large amount of lithium compounds remaining on the surface thereof, which may become a cause of degradation in stability by causing a side reaction during charging and discharging processes, thereby generating a gas.

In addition, the high-nickel positive electrode active material has a disadvantage of undergoing a significant change in lattice constant, that is, a change in volume in a unit lattice, and the volume change causes the generation of cracks in active material particles. The cracks generated as described above cause the generation of voids in the active material, which may lead to deterioration in battery performance.

In addition, as the nickel content is high, cation mixing between lithium ions and nickel ions occurs frequently, which interferes with the movement of lithium ions when driving a battery, thereby causing an increase in battery resistance and deterioration in lifespan.

Therefore, the inventors of the present invention are to provide a positive electrode active material having excellent structural stability due to a low crystal strain and a low cation mixing rate while including a high content of nickel, and a method for preparing the positive electrode active material.

A positive electrode active material according to the present invention includes a lithium transition metal oxide having a nickel content of 80 mol% or greater among metals excluding lithium and in the form of a single particle composed of 1 to 30 nodules, wherein a cation mixing rate (P) satisfies Equation 1 below.

[Equation 1]

$$P \leq \frac{-6X + 1,020}{S}$$

In Equation 1 above, P is a cation mixing rate value of the positive electrode active material, and X is a value of the content of nickel among metals excluding lithium in the lithium transition metal oxide, wherein the cation mixing rate is measured in a unit of at%, and the content of nickel is measured in a unit of mol%, but P and X are unitless numbers without units, and S is a value obtained by multiplying a crystal strain by $10^6$.

Specifically, the cation mixing rate corresponding to the P above may be 2.0 at% or less, preferably 1.5 at% or less, and more preferably 1.3 at% or less. Since cation mixing refers to a phenomenon in which $Li^+$ and $Ni^{2+}$ having ion radii similar to each other exchange places with each other, thereby forming a crystal, if a cation mixing rate is high, when $Li^+$ is intercalated and deintercalated, $Ni^{2+}$ present in a space layer of $Li^+$ acts as a resistance component, thereby reducing charge/discharge efficiency, so that it is preferable that the cation mixing rate is 2.0 at% or less.

The content of nickel in metals excluding lithium of the lithium transition metal oxide corresponding to the X above, may be 80 mol% or greater, preferably 83 mol% or greater, and more preferably 90 mol% or greater. In this case, there is an advantage in that a high capacity may be implemented. As the nickel content in the positive electrode active material increases, the amount of $Ni^{3+}$ increases, thereby decreasing a cation mixing rate affected by $Ni^{2+}$, and Equation 1 above may represent electrochemical properties of the positive electrode active material in a composition in which the content of nickel among metals excluding lithium is 80 mol% or greater.

The crystal strain corresponding to the S above may be $300 \times 10^{-6}$ or less, preferably $290 \times 10^{-6}$ or less, and more preferably $280 \times 10^{-6}$ or less. A large crystal strain means low structural stability, so that if the above-described range is not satisfied, it is not preferable since the structure may easily collapse during an electrode roll-pressing process or battery driving process. On the other hand, a positive electrode active material having a crystal strain satisfying the above-described range has a high degree of structural completeness, and thus, may contribute to increasing the energy density of a positive electrode active material, and lowering the gas generation amount during high-temperature storage and driving of a battery.

Meanwhile, the lithium transition metal oxide may include nickel, cobalt, and manganese. In addition, the lithium transition metal oxide may have a composition of Formula 1 below.

[Formula 1]     $Li_{1+x}(Ni_aCo_bM^1_cM^2_d)O_2$

In Formula 1 above, $M^1$ is Mn, Al, or a combination thereof, $M^2$ is one or more selected from the group consisting of W, Cu, Fe, V, Cr, Ti, Zr, Zn, In, Ta, Y, La, Sr, Ga, Sc, Gd, Sm, Ca, Ce, Nb, Mg, B, and Mo, and $0 \leq x \leq 0.50$, $0.80 \leq a \leq 1$, $0 \leq b \leq 0.20$, $0 \leq c \leq 0.20$, $0 \leq d \leq 0.1$, and $a+b+c+d=1$.

The 1+x represents the molar ratio of lithium in the lithium transition metal oxide, wherein the x may satisfy $0 \leq x \leq 0.20$, or $0 \leq x \leq 0.10$. When the molar ratio of lithium satisfies the above-described range, the crystal structure may be stably formed.

The a represents the molar ratio of nickel among all metals excluding lithium in the lithium transition metal oxide, wherein the a may satisfy $0.83 \leq a < 1$, $0.85 \leq a < 1$, or $0.90 \leq a < 1$. When the molar ratio of nickel satisfies the above-described range, a high energy density is exhibited, making it possible to implement a high capacity.

The b represents the molar ratio of cobalt among all metals excluding lithium in the lithium transition metal oxide, wherein the b may satisfy $0 < b \leq 0.15$, $0 < b \leq 0.12$, or $0 < b \leq 0.07$. When the molar ratio of cobalt satisfies the above-described range, good resistance properties and output properties may be implemented.

The c represents the molar ratio of an $M^1$ element among all metals excluding lithium in the lithium transition metal oxide, wherein the c may satisfy $0 < c \leq 0.15$, $0 < c \leq 0.10$, or $0 < c \leq 0.07$. Meanwhile, the $M^1$ may ne Mn, or a combination of Mn and Al, and may preferably be Mn.

The d represents the molar ratio of an $M^2$ element along all metals excluding lithium in the lithium transition metal oxide, wherein the d may satisfy $0 \leq d \leq 0.08$, $0 \leq d \leq 0.05$, or $0 \leq d \leq 0.03$.

Meanwhile, the lithium transition metal oxide according to the present invention is in the form of a single particle composed of 1 to 30 nodules, and thus, has higher particle strength than a typical positive electrode active material in the form of a secondary particle in which tens to hundreds of primary particles are aggregated, so that particle breakage hardly occurs during roll-pressing. In addition, in the case of the positive electrode active material in the form of a single particle, the number of primary particles constituting the particle is small, there is little change due to volume expansion and reduction of the primary particles during charging and discharging, and accordingly, the generation of cracks inside the particles is significantly reduced.

That is, if a positive electrode active material including the single-particle-type lithium transition metal oxide according to the present invention is used, it is possible to significantly improve a phenomenon in which lifespan properties are reduced due to particle breakage and internal crack generation which occur when a positive electrode active material including a typical secondary- particle-type lithium transition metal oxides is used.

In addition, the positive electrode active material may have a $D_{50}$ of 3.0 $\mu$m to 6.0 $\mu$m, preferably 3.5 $\mu$m to 5.0 $\mu$m, and more preferably 4.0 $\mu$m to 4.5 $\mu$m. Although it is preferable that the $D_{50}$ of the positive electrode active material is 3.0 $\mu$m or greater in terms of preventing aggregation between nodules, increasing electrode processability, and reducing generation amount of lithium by-products, but if the size of the positive electrode active material increases excessively, particle breakage may be intensified, so that it is preferable that the $D_{50}$ is 6.0 $\mu$m or less in terms of improving lifespan properties and high-temperature storage properties due to reduced particle breakage. In addition, if the firing temperature is increased or the firing time is increased in order to increase the $D_{50}$, the crystal strain and the cation mixing rate increase, so that it is preferable that the $D_{50}$ is controlled to be within the above-described range in terms of implementing a positive electrode active material satisfying Equation 1 above.

In addition, when the positive electrode active material is pressed with a force of 12 tons, a generation rate of fine particles having a particle diameter of 1 $\mu$m or less may be 2.0 vol% or less, preferably 1.5 vol% or less, and more preferably 1.0 vol% or less with respect to the total volume of the positive electrode active material. In this case, it means that a particle has excellent durability against roll-pressing, so that if necessary, the intensity of the roll-pressing may be increased to increase the energy density, and also, an amount of gas generated due to a side reaction during high-temperature driving or storage may be reduced, and lifespan may be improved.

In addition, the positive electrode active material may have a single-particleization of 3.0 to 4.5, specifically 3.1 or greater, or 3.2 or greater according to Equation 2 below.

$$[\text{Equation 2}]$$

$$\frac{\sum_{i=1}^{n} \frac{4\pi}{3} \times R_i^3}{n}$$

In Equation 2 above, $R_i$ is a half-diameter value of an i-th grain as measured by ion-milling an electrode manufactured by applying the positive electrode active material, and then analyzing the electrode by electron backscatter diffraction (EBSD), wherein the half-diameter of the grain is measured in a unit of $\mu$m, but the $R_i$ is a unitless number without a unit, and n is the total number of grains as measured by the EBSD analysis, which 350 to 450.

The larger the single-particleization, the more the positive electrode active material particle having a small number of grains in the positive electrode active material, that is, a particle in the form of a single particle, so that there is an effect of improving high-temperature performance. However, if greater than 4.5, the resistance increases excessively, which may degrade output and capacity properties, so that single-particleization may be 4.5 or less, 4.0 or less, or 3.5 or less.

In addition, a half-diameter of a grain corresponding to $R_i$ of Equation 1 above may be 0.4 $\mu$m to 2.5 $\mu$m, specifically 0.5 $\mu$m to 2.0 $\mu$m, and more specifically 0.6 $\mu$m to 1.0 $\mu$m. Meanwhile, an average grain diameter of the positive electrode active material as measured through EBSD may be 1.0 $\mu$m to 4.5 $\mu$m, preferably 1.2 $\mu$m to 3.0 $\mu$m, and more preferably 1.4 $\mu$m to 2.0 $\mu$m. When the average grain diameter of the positive electrode active material satisfies the above-described range, it is advantageous in improving the capacity retention rate of a battery due to reduced particle breakage.

Meanwhile, the positive electrode active material includes LiOH and $Li_2CO_3$ as residual lithium by-products on the surface of a particle, and the total weight of the LiOH and $Li_2CO_3$ may be 0.50 wt% or less, preferably 0.45 wt% or less with respect to the total weight of the positive electrode active material. In this case, it means that there is a small number of lithium by-products acting as resistance, so that it is possible to increase charge/discharge efficiency, and to reduce an amount of gas generated due to a side reaction. Specifically, the total weight of LiOH may be 0.20 wt% or less, or 0.17 wt% or less, and the total weight of $Li_2CO_3$ may be 0.30 wt% or less, or 0.28 wt% or less with respect to the total weight of the positive electrode active material. The content of LiOH and the content of $Li_2CO_3$ may be confirmed through pH titration of the positive electrode active material.

Meanwhile, the positive electrode active material may be a mixture of the single-particle-type lithium transition metal oxide and a secondary-particle-type lithium transition metal oxide having a larger particle diameter than the single-particle-type lithium transition metal oxide.

**Method for preparing positive electrode active material**

Hereinafter, a method for preparing a positive electrode active material according to the present invention will be described.

The method for preparing a positive electrode active material includes a first step of mixing a transition metal precursor oxide having a nickel content of 80 mol% or greater among all metals with an anhydrous lithium raw material to prepare a mixture, and a second step of firing the mixture to prepare a single-particle-type lithium transition metal oxide composed of 1 to 30 nodules, wherein a ratio $(D_L/D_P)$ of a $D_{50}$ $(D_L)$ of the anhydrous lithium raw material to a $D_{50}$ $(D_P)$ of the transition metal precursor oxide is 4 to 20.

By controlling the $D_L/D_P$ to 4 to 20 as described above, it is possible to obtain an effect of increasing the uniformity of a positive electrode active material synthesis reaction and increase the yield. When considering the fact that the $D_{50}$ $(D_P)$ of the precursor oxide is set to correspond to a target $D_{50}$ of the positive electrode active material, and thus, is controlled to a limited degree, the $D_L/D_P$ serves as a main factor for the $D_{50}$ $(D_L)$ of the lithium raw material.

In this case, if the $D_L/D_P$ is less than 4, that is, if the $D_L$ is small, a lithium raw material having a larger surface area is used based on the same weight, and if the surface area is large, there is a problem in that the yield is reduced due to easy vaporization. On the other hand, if the $D_L/D_P$ is greater than 20, that is, if the $D_L/D_P$ is large, due to the difference in size with the precursor oxide, it is difficult to achieve homogeneous mixing, so that a positive electrode active material structurally incomplete may be synthesized, or a positive electrode active material having a large amount of residual lithium may be synthesized. That is, if the $D_L/D_P$ is 4 to 20, it is preferable in terms of increasing structural completeness of a positive electrode active material and reducing an amount of residual lithium while securing the yield. Ultimately, when the $D_L/D_P$ is 4 to 20, it may contribute to the preparation of a positive electrode active material satisfying Equation 1 above in that lithium diffusion in the precursor oxide is improved during firing due to a suitable surface area and homogenization, which leads to the preparation of a positive electrode active material having excellent structural stability (that is, a low crystal strain and a low cation mixing rate).

Specifically, the $D_L/D_P$ may preferably be 5 or greater, 8 or greater, or 10 or greater, and 18 or less, 16 or less, or 14 or less.

Next, each step will be described in detail.

1) First step

First, in a reactor, a transition metal precursor oxide having a nickel content of 80 mol% or greater and an anhydrous lithium raw material are mixed.

Specifically, the content of nickel among metals of the transition metal precursor oxide may be 83 mol% or greater, preferably 85 mol% or greater, and more preferably 90 mol% or greater. In this case, there is an advantage in that a high capacity may be implemented.

The transition metal precursor oxide may include nickel, cobalt, and manganese. In addition, the transition metal precursor oxide may have a composition of Formula 2 below.

$$[\text{Formula 2}] \qquad Ni_{a1}Co_{b1}M^1_{c1}M^2_{d1}O$$

In Formula 2 above, $M^1$ is Mn, Al, or a combination thereof, $M^2$ is one or more selected from the group consisting of W, Cu, Fe, V, Cr, Ti, Zr, Zn, In, Ta, Y, La, Sr, Ga, Sc, Gd, Sm, Ca, Ce, Nb, Mg, B, and Mo, and $0.80 \leq a1 \leq 1$, $0 \leq b1 \leq 0.20$, $0 \leq c1 \leq 0.20$, $0 \leq d1 \leq 0.10$, and $a1+b1+c1+d1=1$.

The a1 represents the molar ratio of nickel among all metals excluding lithium in the transition metal precursor oxide, wherein the a1 may satisfy $0.83 \leq a1 < 1$, $0.85 \leq a1 < 1$, or $0.90 \leq a1 < 1$.

The b1 represents the molar ratio of cobalt among all metals excluding lithium in the transition metal precursor oxide, wherein the b1 may satisfy $0 < b1 \leq 0.15$, $0 < b1 \leq 0.10$, or $0 < b1 \leq 0.05$.

The c1 represents the molar ratio of an $M^1$ element among all metals excluding lithium in the transition metal precursor oxide, wherein the c1 may satisfy $0 < c1 \leq 0.15$, $0 < c1 \leq 0.10$, or $0 < c1 \leq 0.05$. Meanwhile, the $M^1$ may be Mn, or a combination of Mn and Al.

The d1 represents the molar ratio of an $M^2$ element among all metals excluding lithium in the transition metal precursor oxide, wherein the d1 may satisfy $0 \leq d1 \leq 0.08$, $0 \leq d1 \leq 0.05$, or $0 \leq d1 \leq 0.03$.

The transition metal precursor oxide may be prepared by oxidizing a precursor in the form of a hydroxide commonly used in the art, and for example, may be prepared by a method of heat-treating a precursor in the form of a hydroxide in an oxygen atmosphere or reacting the precursor with an oxidizing agent.

As the anhydrous lithium raw material, anhydrous forms of a sulfate, nitrate, acetate, carbonate, oxalate, citrate, halide, hydroxide, or oxyhydroxide, all of which contain lithium, may be used, and for example, $Li_2CO_3$, $LiNO_3$, $LiNO_2$, $LiOH$, $LiH$, $LiF$, $LiCl$, $LiBr$, $LiI$, $CH_3COOLi$, $Li_2O$, $Li_2SO_4$, $CH_3COOLi$, $Li_3C_6H_5O_7$, or a mixture thereof may be used. Specifically, the anhydrous lithium raw material may be anhydrous $LiOH$, and the anhydrous $LiOH$ may be prepared by pulverizing, vacuum-drying, and then pulverizing again $LiOH \cdot H_2O$.

When a transition metal precursor oxide and an anhydrous lithium raw material are used as in the present invention (Reaction Equation 1 below), the production yield may be increased compared to when a hydroxide precursor and a lithium raw material in the form of a hydrate are used (Reaction Equation 2 below). In Reaction Equations 1 and 2 below, the numbers in the parentheses represent molecular weights, and M represents a metal element excluding Ni, and the molecular weight of the M is not reflected. When comparing Reaction Equations 1 and 2, it can be confirmed that the yield, which represents the weight of a prepared lithium transition metal oxide ($LiNiMO_2$) with respect to the weight of an input raw material, is much higher in Reaction Equation 1.

[Reaction Equation 1]    $LiOH(24.0) + NiMO(74.7) \rightarrow LiNiMO_2(97.6) + 1/2H_2(1)$ (Yield: 97.6/98.7=98.89%)

[Reaction Equation 2]    $LiOH \cdot H_2O(42.0) + NiM(OH)_2(92.7) \rightarrow LiNiMO_2(97.6) + 2H_2O(36) + 1/2H_2(1)$ (Yield: 97.6/134.7=72.46%)

In addition, in the method for preparing a positive electrode active material according to an embodiment of the present invention, a raw material loss rate according to Equation 3 below may be 5 wt% or less, preferably 3 wt% or less, and more preferably 1 wt% or less. The raw material loss rate is equal to a value obtained by subtracting the yield described above from 100%.

[1-{Weight of prepared lithium transition metal oxide/(Input weight of transition metal precursor oxide +Input weight of anhydrous lithium raw material)}] $\times$ 100 (%)    [Equation 3]

In addition, when a hydroxide precursor and a lithium raw material in the form of a hydrate are used, a process of $LiOH \cdot H_2O \rightarrow LiOH$, and a process of $NiM(OH)_2 \rightarrow NiMO$ are performed during a firing process, whereas when a transition metal precursor oxide and an anhydrous lithium raw material are used as in the present invention, the above-described processes are not performed, so that the firing temperature may be lowered. That is, even if firing is performed at a lower temperature than a typical single particle firing temperature, the same level of particle properties may be obtained.

In addition, when an oxide precursor and an anhydrous lithium raw material are used, it may contribute to the preparation of a positive electrode active material satisfying Equation 1 above in that the BET specific surface area of the positive electrode active material increases during oxidation, thereby increasing reactivity.

Meanwhile, the anhydrous lithium raw material and the transition metal precursor oxide may be mixed such that the molar ratio of Li: all metals in the precursor is to be 1:1 to 1.2:1, preferably 1:1 to 1.1:1. If the mixing ratio of the lithium raw material and the metals in the precursor satisfies the above-described range, a layered crystal structure of the lithium composite transition metal oxide is well developed, so that a positive electrode active material having excellent capacity properties and structural stability may be prepared.

In addition, in order to achieve the $D_{50}$ of the positive electrode active material described above, the $D_{50}$ of the transition metal precursor oxide may be 3.0 $\mu$m to 6.0 $\mu$m, preferably 3.0 $\mu$m to 5.0 $\mu$m.

In addition, the $D_{50}$ of the anhydrous lithium raw material may be 12 $\mu$m to 60 $\mu$m, preferably 15 $\mu$m to 55 $\mu$m, and more preferably 20 $\mu$m to 50 $\mu$m. If the $D_{50}$ of the anhydrous lithium raw material is within the above-described range, it is easy to implement the above-described effect by controlling the $D_L/D_P$ to 4 to 20.

2) Second step

Subsequent to the first step, a step of firing the mixture prepared in the first step to prepare a single-particle-type lithium transition metal oxide is performed.

The firing may be performed at 650 °C to 900 °C, preferably 650 °C to 850 °C, and more preferably 700 °C to 800 °C for 10 hours to 15 hours under an oxygen atmosphere. In order to prepare a single-particle-type lithium transition metal oxide, it is common to perform firing at a temperature of at least 800 °C or higher, but in the present invention, as described above, a transition metal precursor in the form of an oxide and an anhydrous lithium raw material are used, so that it is possible to obtain a single-particle-type even if the firing is performed at a relatively low temperature.

When considering the fact that the higher the firing temperature, the better the particle growth reaction and the higher the single-particleization, it is preferable that the firing temperature is 650 °C or higher. However, when considering the fact that if the content of $Li_2O$ increases due to high-temperature firing, the $Li_2O$ is easily converted to LiOH, and then LiOH is easily converted back to $Li_2CO_3$, which may cause a side reaction with an electrolyte solution and gas generation, it is preferable that the firing temperature is 900 °C or lower. Here, the oxygen atmosphere means an atmosphere in which oxygen in an amount sufficient for firing is included, including an atmospheric atmosphere. Particularly, it is preferable that the firing is performed in an atmosphere in which the oxygen partial pressure is higher than that of the atmospheric atmosphere.

Meanwhile, the second step may further include a step of performing milling after the firing.

The milling process is to remove large particles and obtain a particle size of positive electrode active material powder within a desired numerical range. The milling may be performed through a common milling method known in the art, for example, a jet-mill method, but is not limited thereto.

## Positive electrode

Next, a positive electrode according to the present invention will be described.

The positive electrode according to the present invention includes the positive electrode active material according to the present invention. Specifically, the positive electrode includes a positive electrode current collector, and a positive electrode active material layer formed on the positive electrode current collector and including the positive electrode active material.

In the positive electrode, the positive electrode current collector is not particularly limited as long as it has conductivity without causing a chemical change in the battery, and for example, stainless steel, aluminum, nickel, titanium, fired carbon, or aluminum or stainless steel that is surface-treated with one of carbon, nickel, titanium, silver, and the like may be used. Also, the positive electrode current collector may typically have a thickness of 3 $\mu$m to 500 $\mu$m, and microscopic irregularities may be formed on the surface of the positive electrode current collector to improve the adhesion of the positive electrode active material. For example, the positive electrode current collector may be used in various forms such as a film, a sheet, a foil, a net, a porous body, a foam, and a non-woven body.

In addition, the positive electrode active material layer may include a conductive material and a binder, together with the positive electrode active material described above.

The positive electrode active material may typically be included in an amount of 80 wt% to 99 wt%, preferably 90 wt% to 98 wt%, and more preferably 95 wt% to 97 wt% based on the total weight of a positive electrode active material layer.

The conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; carbon black such as acetylene black, Ketjen black, channel black, furnace black, lamp black, and thermal black; a carbon-based material such as carbon fiber and a carbon nanotube; metal powder or metal fiber of such as copper, nickel, aluminum, and silver; a conductive whisker of such as zinc oxide and potassium titanate; a conductive metal oxide such as a titanium oxide; or a conductive polymer such as a polyphenylene derivative, and any one thereof or a mixture of two or more thereof may be used. The conductive material may typically be included in an amount of 0.5 wt% to 20 wt%, preferably 1 wt% to 10 wt%, and more preferably 1 wt% to 5 wt% based on the total weight of a positive electrode active material layer.

The binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used. The binder may be included in an amount of 0.5 wt% to 20 wt%, preferably 1 wt% to 10 wt%, and more preferably 1 wt% to 5 wt% based on the total weight of the positive electrode active material layer.

The positive electrode may be manufactured according to a typical method for manufacturing a positive electrode. For example, the positive electrode may be manufactured by mixing a positive electrode active material, a binder, and/or a conductive material in a solvent to prepare a positive electrode slurry, and applying the positive electrode slurry on a positive electrode current collector, followed by drying and roll-pressing.

The solvent may be a solvent commonly used in the art, and may be dimethyl sulfoxide (DMSO), isopropyl alcohol, N-methylpyrrolidone (NMP), acetone, water, or the like, and any one thereof or a mixture of two or more thereof may be used. The solvent may be used in an amount sufficient to dissolve or disperse the positive electrode active material, the conductive material, and the binder in consideration of the application thickness and preparation yield of a slurry, and to allow the slurry to have a viscosity which may exhibit excellent thickness uniformity when applied for the manufacturing of the positive electrode later.

In another method, the positive electrode may be manufactured by casting the positive electrode slurry on a separate support and then laminating a film peeled off from the support on a positive electrode current collector.

**Lithium secondary battery**

Next, a lithium secondary battery according to the present invention will be described.

Specifically, the lithium secondary battery includes a positive electrode, a negative electrode including a negative electrode active material, a separator interposed between the positive electrode and the negative electrode, and an electrolyte. Since the positive electrode is the same as that described above, a detailed description thereof will be omitted, and hereinafter, only the rest of the components will be described in detail.

Also, the lithium secondary battery may optionally further include a battery case for accommodating an electrode assembly composed of the positive electrode, the negative electrode, and the separator, and a sealing member for sealing the battery case.

In the above lithium secondary battery, the negative electrode includes a negative electrode current collector and a negative electrode active material layer positioned on the negative electrode current collector.

The negative electrode current collector is not particularly limited as long as it has high conductivity without causing a chemical change in a battery, and for example, copper, stainless steel, aluminum, nickel, titanium, fired carbon, copper or stainless steel that is surface-treated with one of carbon, nickel, titanium, silver, and the like, an aluminum-cadmium alloy, and the like may be used. Also, the negative electrode current collector may typically have a thickness of 3 $\mu$m to 500 $\mu$m, and as in the case of the positive electrode current collector, microscopic irregularities may be formed on the surface of the current collector to improve the binding force of a negative electrode active material. For example, the negative electrode current collector may be used in various forms such as a film, a sheet, a foil, a net, a porous body, a foam, and a non-woven body.

The negative electrode active material layer optionally includes a binder and a conductive material, together with the negative electrode active material.

As the negative electrode active material, a compound capable of reversible intercalation and de-intercalation of lithium may be used. Specific examples thereof may include a carbonaceous material such as artificial graphite, natural graphite, graphitized carbon fiber, and amorphous carbon; a metallic compound alloyable with lithium such as Si, Al, Sn, Pb, Zn, Bi, In, Mg, Ga, Cd, an Si alloy, an Sn alloy, or an Al alloy; a metal oxide which may be doped and undoped with lithium such as $SiO_\beta(0<\beta< 2)$, $SnO_2$, a vanadium oxide, and a lithium vanadium oxide; or a composite including the metallic compound and the carbonaceous material such as an Si-C composite or an Sn-C composite, and any one thereof or a mixture of two or more thereof may be used.

In an embodiment of the present invention, the negative electrode active material may be graphite, the Si-containing material, or a mixture thereof, specifically graphite, and more specifically, a mixture of artificial graphite and natural graphite. Also, a metal lithium thin film may be used as the negative electrode active material. The negative electrode active material may be included in an amount of 80 wt% to 99 wt% based on the total weight of the negative electrode active material layer.

The binder is a component for assisting in binding between a conductive material, an active material, and a current collector, and is typically added in an amount of 0.1 wt% to 10 wt% based on the total weight of the negative electrode active material layer. Examples of the binder may include polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated-EPDM, styrene-butadiene rubber, nitrile-butadiene rubber, fluorine rubber, various copolymers thereof, and the like.

The conductive material is a component for further improving the conductivity of the negative electrode active material, and may be added in an amount of 10 wt% or less, preferably 5 wt% or less based on the total weight of the negative electrode active material layer. The conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; conductive fiber such as carbon fiber and metal fiber; fluorinated carbon; metal powder such as aluminum powder and nickel powder; a conductive whisker such as zinc oxide and potassium titanate; a conductive metal oxide such as titanium oxide; and a conductive material such as a polyphenylene derivative, or the like may be used.

The negative electrode active material layer may be prepared by applying a negative electrode mixture material, which is prepared by dissolving or dispersing a negative electrode active material, and optionally, a binder, and a conductive material in a solvent, on a negative electrode current collector, followed by drying, or by casting the negative electrode mixture material on a separate support, and then laminating a film obtained by being peeled off from the support on the negative electrode current collector.

Meanwhile, in the above-described lithium secondary battery, the separator is to separate the negative electrode and the positive electrode and to provide a movement path for lithium ions, and any separator typically used as a separator in a lithium secondary battery may be used without particular limitation, and particularly, a separator having excellent moisture-retention ability for an electrolyte while having low resistance to the movement of electrolyte ions is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, or an ethylene/methacrylate copolymer, or a stacked structure having two or more layers thereof may be used. In addition, a typical porous non-woven fabric, for example, a non-woven fabric made of glass fiber having a high melting point, polyethylene terephthalate fiber, or the like may be used. Also, a coated separator including a ceramic component or a polymer material may be used to secure heat resistance or mechanical strength, and may optionally be used in a single-layered or multi-layered structure.

In addition, the electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, or the like, which may be used in the manufacturing of a lithium secondary battery, but is not limited thereto.

Specifically, the electrolyte may include an organic solvent and a lithium salt.

As the organic solvent, any organic solvent may be used without particular limitation as long as it can serve as a medium through which ions involved in an electrochemical reaction of a battery may move. Specifically, as the organic solvent, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (wherein R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these, the carbonate-based solvent is preferred, and a mixture of a cyclic carbonate (e.g., ethylene carbonate or propylene carbonate) having high ion conductivity and a high dielectric constant, which may increase charge/discharge performance of the battery, and a low-viscosity linear carbonate-based compound (e.g., ethylmethyl carbonate, dimethyl carbonate, diethyl carbonate, or the like) is more preferred.

As the lithium salt, any compound may be used without particular limitation as long as it can provide lithium ions used in a lithium secondary battery. Specifically, anions of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and as the lithium salt, $LiPF_6$, $LiClO_4$, $LiAsF_6$, $LiBF_4$, $LiSbF_6$, $LiAlO_2$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, or the like may be used. It is preferable that the lithium salt is used in a concentration range of 0.1 M to 4.0 M. If the concentration of the lithium salt is included in the above-described range, the electrolyte has suitable conductivity and viscosity, and thus, may exhibit excellent electrolyte performance, and lithium ions may effectively move.

In order to improve lifespan properties of a battery, suppress a decrease in battery capacity, improve discharge capacity of the battery, and the like, the electrolyte may further include, for example, one or more additives such as a haloalkylene carbonate-based compound such as difluoroethylene carbonate, pyridine, triethylphosphite, triethanolamine, cyclic ether, ethylene diamine, n-glyme, hexamethylphosphate triamide, a nitrobenzene derivative, sulfur, a quinone imine dye, N-substituted oxazolidinone, N,N-substituted imidazolidine, ethylene glycol dialkyl ether, ammonium salt, pyrrole, 2-methoxy ethanol, or aluminum trichloride. At this time, the additive may be included in an amount of 0.1 wt% to 5 wt% based on the total weight of the electrolyte.

The external shape of the lithium secondary battery of the present invention is not particularly limited, but may be a cylindrical shape using a can, a square shape, a pouch shape, a coin shape, or the like.

The lithium secondary battery including the positive electrode active material according to the present invention as describe above stably exhibits high-temperature performance, and thus, may be used not only in a battery cell used as a power source of a small device such as a mobile phone, a notebook computer, or a digital camera, but also as a unit cell of a battery module for a medium-or large-sized device including a plurality of battery cells.

Examples of the medium- and large-sized device include power tools, electric vehicles, hybrid electric vehicles, plug-in hybrid electric vehicles, and electric power storage systems, but are not limited thereto.

According to another embodiment of the present invention, a battery module including the lithium secondary battery as a unit cell, and a battery pack including battery module are provided.

Hereinafter, embodiments of the present invention will be described in detail so that those skilled in the art may easily carry out the present invention.

## MDOE FOR CARRYING OUT THE INVENTION

**[Examples: Preparation of positive electrode active material]**

**Example 1.**

A precursor oxide having a $D_{50}$=4 $\mu$m and a composition of $Ni_{0.83}Co_{0.10}Mn_{0.07}O$, and an anhydrous LiOH having a $D_{50}$=20 $\mu$m were introduced into a Henschel mixer (700 L) such that the final Li/(Ni+Co+Mn) molar ratio was to be 1.03, and mixed at a center speed of 400 rpm for 20 minutes. The mixture was placed in an alumina crucible of a 330 mm$\times$330 mm size and heat-treated at 750 °C under an oxygen ($O_2$) atmosphere for 12 hours to prepare a lithium transition metal oxide having a composition of $Li[Ni_{0.83}Co_{0.10}Mn_{0.07}]O_2$ as a positive electrode active material.

**Example 2.**

A precursor oxide having a $D_{50}$=4.5 $\mu$m and a composition of $Ni_{0.90}Co_{0.05}Mn_{0.05}O$, and an anhydrous LiOH having a $D_{50}$=50 $\mu$m were introduced into a Henschel mixer (700 L) such that the final Li/(Ni+Co+Mn) molar ratio was to be 1.03, and mixed at a center speed of 400 rpm for 20 minutes. The mixture was placed in an alumina crucible of a 330 mm$\times$330 mm size and heat-treated at 750 °C under an oxygen ($O_2$) atmosphere for 12 hours to prepare a lithium transition metal oxide having a composition of $Li[Ni_{0.90}Co_{0.05}Mn_{0.05}]O_2$ as a positive electrode active material.

**Comparative Example 1.**

A precursor hydroxide having a $D_{50}$=4 $\mu$m and a composition of $Ni_{0.83}Co_{0.10}Mn_{0.07}(OH)_2$, and $LiOH \cdot H_2O$ having a $D_{50}$=20 $\mu$m were introduced into a Henschel mixer (700 L) such that the final Li/(Ni+Co+Mn) molar ratio was to be 1.03, and mixed at a center speed of 400 rpm for 20 minutes. The mixture was placed in an alumina crucible of a 330 mm$\times$330 mm size and heat-treated at 750 °C under an oxygen ($O_2$) atmosphere for 12 hours to prepare a lithium transition metal oxide having a composition of $Li[Ni_{0.83}Co_{0.10}Mn_{0.07}]O_2$ as a positive electrode active material.

**Comparative Example 2.**

A precursor hydroxide having a $D_{50}$=4 $\mu$m and a composition of $Ni_{0.83}Co_{0.10}Mn_{0.07}(OH)_2$, and $LiOH \cdot H_2O$ having a $D_{50}$=20 $\mu$m were introduced into a Henschel mixer (700 L) such that the final Li/(Ni+Co+Mn) molar ratio was to be 1.03, and mixed at a center speed of 400 rpm for 20 minutes. The mixture was placed in an alumina crucible of a 330 mm$\times$330 mm size and heat-treated at 820 °C under an oxygen ($O_2$) atmosphere for 12 hours to prepare a lithium transition metal oxide having a composition of $Li[Ni_{0.83}Co_{0.10}Mn_{0.07}]O_2$ as a positive electrode active material.

**Comparative Example 3.**

A precursor oxide having a $D_{50}$=4 $\mu$m and a composition of $Ni_{0.83}Co_{0.10}Mn_{0.07}O$, and an anhydrous LiOH having a $D_{50}$=10 $\mu$m were introduced into a Henschel mixer (700 L) such that the final Li/(Ni+Co+Mn) molar ratio was to be 1.03, and mixed at a center speed of 400 rpm for 20 minutes. The mixture was placed in an alumina crucible of a 330 mm$\times$330 mm size and heat-treated at 750 °C under an oxygen ($O_2$) atmosphere for 12 hours to prepare a lithium transition metal oxide having a composition of $Li[Ni_{0.83}Co_{0.10}Mn_{0.07}]O_2$ as a positive electrode active material.

**Comparative Example 4.**

A precursor oxide having a $D_{50}$=4 $\mu$m and a composition of $Ni_{0.83}Co_{0.10}Mn_{0.07}O$, and an anhydrous LiOH having a $D_{50}$=100 $\mu$m were introduced into a Henschel mixer (700 L) such that the final Li/(Ni+Co+Mn) molar ratio was to be 1.03, and mixed at a center speed of 400 rpm for 20 minutes. The mixture was placed in an alumina crucible of a 330 mm$\times$330 mm size and heat-treated at 750 °C under an oxygen ($O_2$) atmosphere for 12 hours to prepare a lithium transition metal oxide having a composition of $Li[Ni_{0.83}Co_{0.10}Mn_{0.07}]O_2$ as a positive electrode active material.

**Comparative Example 5.**

A precursor oxide having a $D_{50}$=4 $\mu$m and a composition of $Ni_{0.70}Co_{0.20}Mn_{0.10}O$, and an anhydrous LiOH having a $D_{50}$=20 $\mu$m were introduced into a Henschel mixer (700 L) such that the final Li/(Ni+Co+Mn) molar ratio was to be 1.03, and mixed at a center speed of 400 rpm for 20 minutes. The mixture was placed in an alumina crucible of a 330 mm$\times$330 mm size and heat-treated at 750 °C under an oxygen ($O_2$) atmosphere for 12 hours to prepare a lithium transition metal oxide having a composition of $Li[Ni_{0.70}Co_{0.20}Mn_{0.10}]O_2$ as a positive electrode active material.

**[Experimental Examples]**

**Experimental Example 1. Calculation of $D_{50}$ ratio and loss rate**

(1) $D_{50}$ ratio between raw materials

A ratio of a $D_{50}$ of a lithium raw material to a $D_{50}$ of a precursor used in each of Examples 1 to 2 and Comparative Examples 1 to 5 above was calculated and described in Table 1 below.

(2) Loss rate

A raw material loss rate in each of Examples 1 to 2 and Comparative Examples 1 to 5 was calculated according to Equation 3 above and described in Table 1 below. However, in the case of Comparative Examples 1 and 2, in Equation 3 above, the input weight of the precursor hydroxide was substituted instead of the input weight of the precursor oxide, and the input weight of the hydrous lithium raw material was substituted instead of the input weight of the anhydrous lithium raw material.

[Table 1]

| | Example 1 | Example 2 | Comparative Example 1 | Comparative Example 2 | Comparative Example 3 | Comparative Example 4 | Comparative Example 5 |
|---|---|---|---|---|---|---|---|
| Lithium raw material $D_{50}$/Precursor $D_{50}$ | 5 | 11.1 | 5 | 5 | 2.5 | 25 | 5 |
| Loss rate (%) | 0.95 | 1.02 | 27.38 | 29.12 | 3.28 | 3.41 | 1.05 |

Referring to the results of Table 1 above, it can be confirmed that the raw material loss rate is significantly high in Comparative Examples 1 and 2 in which hydrous LiOH was as a lithium raw material. In addition, it can be confirmed that even when a precursor in the form of an oxide and anhydrous LiOH are used, if the ratio of the $D_{50}$ of the lithium raw material to the $D_{50}$ of the precursor is less than 4 or greater than 20 as in Comparative Examples 3 and 4, the raw material loss rate is higher than that of Examples 1 and 2.

**Experimental Example 2. Evaluation of properties of positive electrode active material**

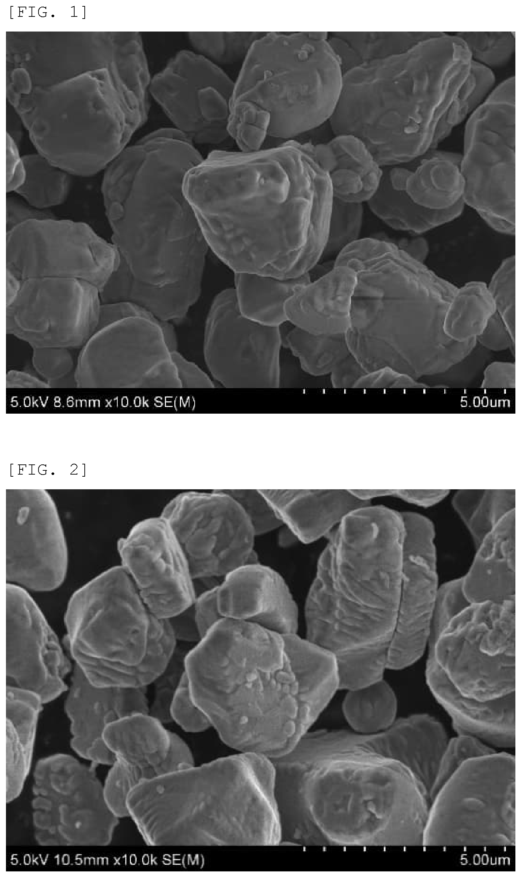

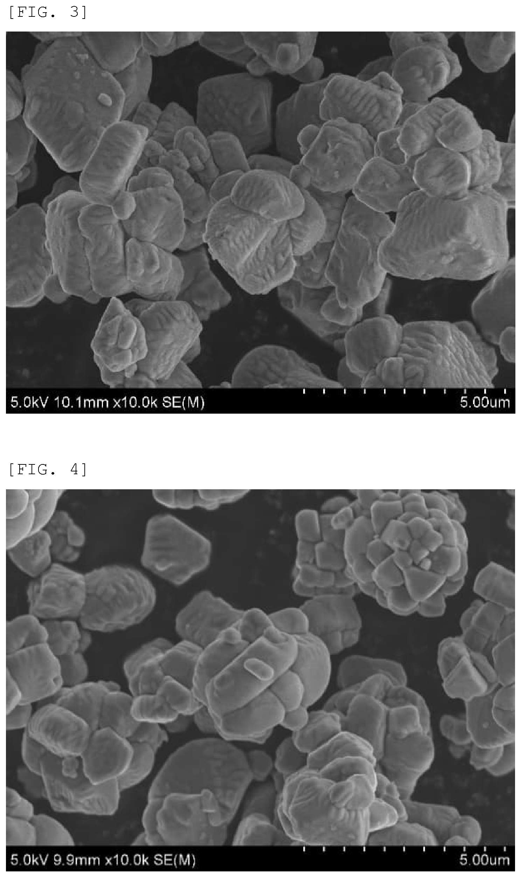

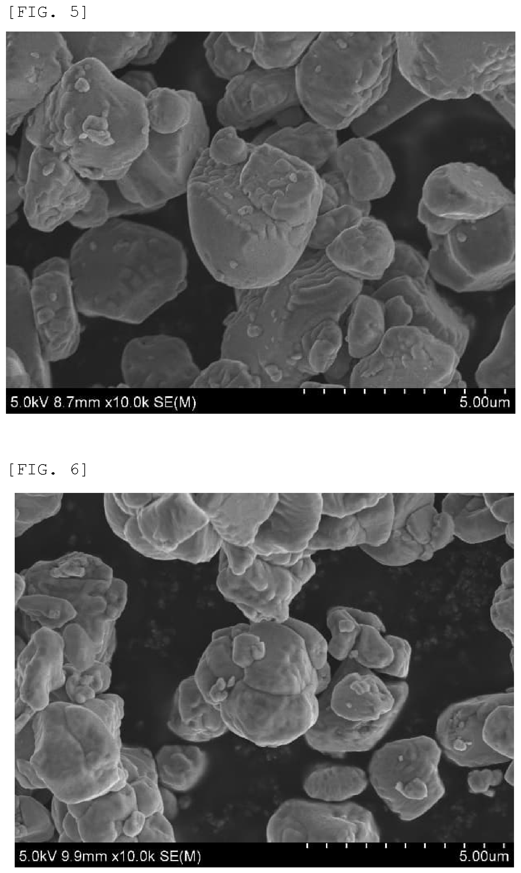

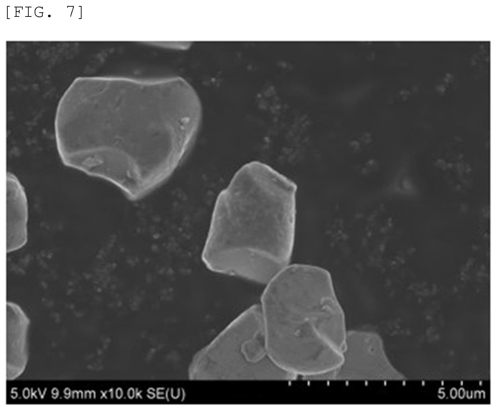

Photographs of the positive electrode active materials prepared in Examples 1 to 2 and Comparative Examples 1 to 5 observed through scanning electron microscope (SEM) are shown in FIG. 1 to FIG. 7, respectively.
In addition, properties of each of the positive electrode active materials were evaluated as shown in (1) to (6) below, and described in Table 2 and Table 3.

(1) $D_{50}$

Through a process in which 0.04 g of each of the positive electrode active materials prepared in Examples 1 and 2 and Comparative Examples 1 to 5 is dispersed in a dispersion medium, and then introduced into a laser diffraction particle size measuring device (Malvern Co., Ltd., Mastersizer 3000) to be irradiated with an ultrasound wave of about 28 kHz to an output of 60 W, a $D_{50}$ of each of the positive electrode active materials was measured.

(2) Crystal strain and cation mixing rate

XRD data obtained by performing X-ray diffraction analysis on each of positive electrode active material powder prepared in Examples 1 and 2 and Comparative Examples 1 to 5 was analyzed by the Rietveld refinement method to measure a crystal strain, and a cation mixing rate was obtained by using an excess value of Ni confirmed after the Rietveld refinement.
At this time, the X-ray diffraction analysis was performed by, using Bruker D8 Endeavor (light source: Cu-K$\alpha$, $\lambda$=1.54 Å) equipped with a LynxEye XE-T-position sensitive detector, placing a sample into a groove of a general powder holder, and then evenly leveling the surface of the sample using a slide glass, followed by filling the groove with the sample such that the height of the sample is the same as the height of the edge of the holder, under the conditions of step size=0.02° and total scan time=about 20 minutes for a FDS 0.5°and 2$\theta$=15° to 90° region. The Rietveld refinement was performed on the measured data in consideration of charge (+3 for metals in transition metal sites, and +2 for Ni in Li sites) and cation mixing in each site. For instrumental broadening during the analysis, Fundamental Parameter Approach (FPA) implemented in the Bruker TOPAS program was used, and during fitting, all peaks in a measurement range were used. A peak shape was fitted using only the Lorenzian contribution as the First Principle (FP) among peak types available in the TOPAS.

(3) Fine particle generation rate

The positive electrode active material powder prepared in Examples 1 to 2 and Comparative Examples 1 to 5 above was placed in a cylindrical metal mold having a diameter of 13 mm, and pressed with a force of 12 ton. The pressed powder was dispersed again in a dispersion medium, and a volume cumulative particle size distribution (PSD) was obtained by using a laser diffraction particle size measuring device (Malvern Co., Ltd., Mastersizer 3000). Based on the obtained PSD, a volume ratio of fine particles having a particle size of 1 $\mu$m or less in the total positive electrode active material powder was calculated, and described as a fine particle generation rate in Table 2 below.

(4) Single-particleization

Each of the positive electrode active material powder prepared in Examples 1 to 2 and Comparative Examples 1 to 5 above, carbon black, and a PVDF binder were mixed at a weight ratio of 95 : 2 : 3 in N-methylpyrrolidone to prepare an electrode slurry. The electrode slurry was applied on one surface of an aluminum current collector, and then dried at 130 °C to prepare an electrode for EBSD analysis. When manufacturing the positive electrode, roll-pressing was not performed.
By using an ion milling device (HITACHI IM-5000, acceleration voltage of 6 kV), the positive electrode was cross-sectioned, and the cross-section of the positive electrode was subjected to EBSD analyses by using FE-SEM (JEOL JSM7900F) equipment equipped with an electron backscatter diffraction (EBSD) analyzer. The EBSD analysis was performed on a scale with a total grain number of approximately 400+/- 10 under the conditions of an acceleration voltage of 15 kV and a W.D. of 15 mm.
Through the EBSD analysis, a diameter of the longest axis of grains was measured in each particle observed on each of the positive electrode cross-sections, wherein the 1/2 of the diameter was calculated as a half-diameter of a grain, and an arithmetic mean value of the diameters was calculated as an average grain diameter. In addition, the half-diameter of a grain and the $D_{50}$ measured in (1) above were substituted into Equation 2 above to calculate single-particleization.

[Table 2]

| | $D_{50}$ [$\mu$m] | Crystalline strain (S) [$\times 10^{-6}$] | Cation mixing ratio (P) [at%] | Substitution into Equation 1 | Fine particle generation rate [vol%] | Average grain diameter [$\mu$m] | Single - particleization |
|---|---|---|---|---|---|---|---|
| Example 1 | 4.2 | 275 | 1.2 | P<1.90 | 0.85 | 1.49 | 3.22 |
| Example 2 | 4.5 | 263 | 1.0 | P<1.83 | 0.92 | 1.44 | 3.32 |
| Comparative Example 1 | 4.1 | 410 | 2.8 | P>1.27 | 4.36 | 1.40 | 1.65 |
| Comparative Example 2 | 3.4 | 295 | 2.4 | P>1.77 | 1.80 | 1.15 | 2.35 |
| Comparative Example 3 | 3.3 | 330 | 2.7 | P>1.58 | 1.44 | 1.23 | 2.80 |
| Comparative Example 4 | 2.8 | 295 | 2.3 | P>1.77 | 1.69 | 1.18 | 2.44 |
| Comparative Example 5 | 3.8 | 370 | 1.44 | P<1.62 | 3.20 | 1.30 | 2.57 |

(5) Amount of residual lithium

5 g of the positive electrode active material powder prepared in each of Examples 1 to 2 and Comparative Examples 1 to 5 was dispersed in 100 mL of water, and then titrated with 0.1 M of HCl to measure changes in the pH value so as to obtain a pH titration curve. By using the pH titration curve, an amount of residual LiOH and an amount of residual $Li_2CO_3$ with respect to the total weight of the positive electrode active material were calculated, and a value obtained by adding the amounts was evaluated as an amount of residual lithium.

[Table 3]

|  | Example 1 | Example 2 | Comparative Example 1 | Comparative Example 2 | Comparative Example 3 | Comparative Example 4 | Comparative Example 5 |
|---|---|---|---|---|---|---|---|
| Amount of residual $Li_2CO_3$ [wt%] | 0.277 | 0.232 | 0.443 | 0.352 | 0.310 | 0.414 | 0.262 |
| Amount of residual LiOH [wt%] | 0.149 | 0.155 | 0.208 | 0.195 | 0.209 | 0.241 | 0.134 |
| Amount of residual lithium [wt%] | 0.426 | 0.387 | 0.651 | 0.547 | 0.520 | 0.655 | 0.396 |

**Experimental Example 3 . Evaluation of coin-cell performance**

(1) Manufacturing of positive electrode

The positive electrode active material prepared in Example 1, a conductive material (carbon black), and a binder (PVdF) were mixed at a weight ratio of 95 : 2 : 3 in N-methyl-2-pyrrolidone (NMP) to prepare a positive electrode slurry having a solid content of 60 wt%. The positive electrode slurry was applied on an aluminum (Al) thin film, which was a positive electrode current collector having a thickness of 15 $\mu$m, to a thickness of 45 $\mu$m and dried, and then roll-pressed to manufacture a positive electrode having a loading amount of 2.8 mAh/cm$^2$. In the same manner, positive electrodes respectively using the positive electrode active materials prepared in Example 2 and Comparative Examples 1 to 5 were also manufactured.

(2) Manufacture of coin half-cell

Each of the positive electrodes manufactured in (1) above was assembled with a lithium metal negative electrode to manufacture a coin half-cell. Specifically, a polyethylene-based separator having a thickness of 15 $\mu$m was interposed between the positive electrode and the negative electrode to manufacture an electrode assembly, and then the electrode assembly was placed inside a coin-type (2023 type) secondary battery case, and an electrolyte solution was injected into the case to complete a half-cell. At this time, as the electrolyte solution, a solution prepared by dissolving 1 M of $LiPF_6$ in a mixed organic solvent in which ethylene carbonate (EC):ethylmethyl carbonate (EMC) were mixed at a volume ratio of 1:2 was used.

(3) Evaluation of high-temperature lifespan

A formation process was performed on each of the half-cells manufactured in (2) above, and then using a PNE-0506 charger/discharger (manufacturer: PNE Solution Co., Ltd.), the half-cells were charged to 4.25 V with 0.5 C (standard capacity 1 C = 200 mAh/g) at 45 °C under a CC-CV condition, and then were CC discharged to 2.5 V with 1.0 C. The above-described charge/discharge was set to one cycle, and after one cycle, an initial discharge capacity was measured, and then 50 cycles of the same charge/discharge were repeated to measure a discharge capacity. Based on the above, a capacity retention rate with respect to the initial discharge capacity was calculated, and the results are described in Table 4 below.

(4) Evaluation of gas generation amount

A formation process was performed on each of the half-cells manufactured in (2) above, and then using a PNE-0506 charger/discharger (manufacturer: PNE Solution Co., Ltd.), the half-cells were charged to 4.25 V with 0.5 C (standard capacity 1 C = 200 mAh/g) at 45 °C under a CC-CV condition, and then were CC discharged to 2.5 V with 1.0 C. Thereafter, the half-cell was stored in a chamber at 60 °C, and taken out of the chamber at intervals of 1 week to calculate changes in volume by applying the Archimedes' principle using a gravimeter (MATSUHAKU, TWD-150DM). The results of calculating a gas generation amount per weight by dividing a volume change amount after 12 weeks by the weight of the positive electrode active material are shown in Table 4 below.

[Table 4]

|  | Capacity retention ratio [%] | Gas generation amount [mL/g] |
|---|---|---|
| Example 1 | 94.4 | 0.22 |
| Example 2 | 93.9 | 0.27 |
| Comparative Example 1 | 89.1 | 0.44 |
| Comparative Example 2 | 91.1 | 0.35 |
| Comparative Example 3 | 92.0 | 0.29 |
| Comparative Example 4 | 91.8 | 0.27 |
| Comparative Example 5 | 91.0 | 0.47 |

Referring to the results of Tables 2 to 4 above, in Examples 1 and 2 in which the oxide precursor having a nickel content of 80 mol% or greater and the anhydrous LiOH were used, wherein the $D_L/D_P$ thereof was controlled to 4 to 20, the crystal strain and the cation mixing rate were low, so that positive electrode active materials satisfying Equation 1 above were prepared, and it can be confirmed that the positive electrode active materials have a large $D_{50}$ and a large grain diameter, high single-particleization, and a low fine particle generation rate. In addition, it can be confirmed that the positive electrode active materials contribute to improving the capacity retention rate of a lithium secondary battery and reducing the amount of gas generation.

On the other hand, in Comparative Examples 1 and 2 in which the hydroxide precursor and the hydrous LiOH were used, positive electrode active materials not satisfying the Equation 1 above were prepared, and it can be confirmed that the positive electrode active materials had a reduced effect of improving cell performance compared to those of Examples. Particularly, in Comparative Example 2, even though the firing temperature was higher than that of Examples, it can be confirmed that a positive electrode active material was prepared which is inferior to those of Examples in all properties including single-particleization.

In addition, even when the oxide precursor and the anhydrous LiOH were used, if the $D_L/D_P$ was less than 4 as in Comparative Example 3, or the $D_L/D_P$ was greater than 20 as in Comparative Example 4, a positive electrode active material not satisfying Equation 1 above was prepared, and it can be confirmed that the positive electrode active materials also had a poor effect of improving particle properties and cell performance compared to the positive electrode active materials of Examples.

Meanwhile, through Comparative Example 5, although a positive electrode active material satisfying Equation 1 was prepared by using the oxide precursor and the anhydrous LiOH and controlling the $D_L/D_P$ thereof to 4 to 20, if the content of nickel did not reach 80 mol%, it can be confirmed that the effect of improving particle properties and cell performance was reduced. That is, in a positive electrode active material having a nickel content of less than 80 mol% among metals excluding lithium, it can be seen that whether Equation 1 is satisfied or not does not represent particle properties and electrochemical performance.

**Claims**

1. A positive electrode active material comprising a single-particle-type lithium transition metal oxide, which has a nickel content of 80 mol% or greater among metals excluding lithium and is composed of 1 to 30 nodules, wherein a cation mixing rate (P) of the positive electrode active material satisfies Equation 1 below:

[Equation 1]

$$P \leq \frac{-6X + 1{,}020}{S}$$

wherein in Equation 1 above,

P is a cation mixing rate value of the positive electrode active material, and
X is a value of the content of nickel among metals excluding lithium in the lithium transition metal oxide, wherein the cation mixing rate is measured in a unit of at%, and the content of nickel is measured in a unit of mol%, but P and X are unitless numbers without units, and S is a value obtained by multiplying a crystal strain by $10^6$.

2. The positive electrode active material of claim 1, wherein the positive electrode active material has a $D_{50}$ of 3.0 $\mu$m to 6.0 $\mu$m.

3. The positive electrode active material of claim 1, wherein the lithium transition metal oxide has a composition of Formula 1 below:

[Formula 1]     $Li_{1+x}(Ni_aCo_bM^1{}_cM^2{}_d)O_2$

wherein in Formula 1 above,

$M^1$ is Mn, Al, or a combination thereof,
$M^2$ is one or more selected from the group consisting of W, Cu, Fe, V, Cr, Ti, Zr, Zn, In, Ta, Y, La, Sr, Ga, Sc, Gd, Sm, Ca, Ce, Nb, Mg, B, and Mo, and
$0 \leq x \leq 0.50$, $0.80 \leq a \leq 1$, $0 \leq b \leq 0.20$, $0 \leq c \leq 0.20$, $0 \leq d \leq 0.10$, and $a+b+c+d=1$.

4. The positive electrode active material of claim 1, wherein the positive electrode active material has a cation mixing rate of 2.0 at% or less.

5. The positive electrode active material of claim 1, wherein, when the positive electrode active material is pressed with a force of 12 tons, a generation rate of fine particles having a particle diameter of 1 $\mu$m or less is 2.0 vol% or less with respect to the total volume of the positive electrode active material.

6. The positive electrode active material of claim 1, wherein the positive electrode active material has a single-particleization of 3.0 to 4.5 according to Equation 2 below:

[Equation 2]

$$\frac{\sum_{i=1}^{n} \frac{4\pi}{3} \times R_i^3}{n}$$

wherein in Equation 2 above,

$R_i$ is a half-diameter value of an i-th grain as measured by ion-milling an electrode manufactured by applying the positive electrode active material, and then analyzing the electrode by electron backscatter diffraction (EBSD), wherein the half-diameter of the grain is measured in a unit of $\mu$m, but the $R_i$ is a unitless number without a unit, and n is the total number of grains as measured by the EBSD analysis, which 350 to 450.

7. The positive electrode active material of claim 1, wherein the positive electrode active material comprises LiOH and $Li_2CO_3$ on the surface of a particle, and the total weight of the LiOH and the $Li_2CO_3$ based on the total weight of the positive electrode active material is 0.50 wt% or less.

8. A method for preparing a positive electrode active material, the method comprising:

a first step of mixing a transition metal precursor oxide having a nickel content of 80 mol% or greater among all metals with an anhydrous lithium raw material to prepare a mixture; and

a second step of firing the mixture to prepare a single-particle-type lithium transition metal oxide composed of 1 to 30 nodules,

wherein a ratio of a $D_{50}$ of the anhydrous lithium raw material to a $D_{50}$ of the transition metal precursor oxide is 4 to 20.

9. The method of claim 8, wherein the transition metal precursor oxide has a composition of Formula 2 below:

[Formula 2]    $Ni_{a1}Co_{b1}M^1_{c1}M^2_{d1}O$

wherein in Formula 2 above,

$M^1$ is Mn, Al, or a combination thereof,

$M^2$ is one or more selected from the group consisting of W, Cu, Fe, V, Cr, Ti, Zr, Zn, In, Ta, Y, La, Sr, Ga, Sc, Gd, Sm, Ca, Ce, Nb, Mg, B, and Mo, and

$0.80 \leq a1 \leq 1$, $0 \leq b1 \leq 0.20$, $0 \leq c1 \leq 0.20$, $0 \leq d1 \leq 0.10$, and $a1+b1+c1+d1=1$.

10. The method of claim 8, wherein the transition metal precursor oxide has a $D_{50}$ of 3 μm to 6 μm.

11. The method of claim 8, wherein the anhydrous lithium raw material has a $D_{50}$ of 12 μm to 60 μm.

12. The method of claim 8, wherein the firing of the second step is performed at 650 °C to 900 °C.

13. The method of claim 8, wherein a raw material loss rate according to Equation 3 below is 5 wt% or less:

[1-{Weight of prepared lithium transition metal oxide/(Input weight of transition metal precursor oxide+Input weight of anhydrous lithium raw material)}] × 100 (%)     [Equation 3]

14. A positive electrode comprising the positive electrode active material of claim 1.

15. A lithium secondary battery comprising:
the positive electrode according to claim 14; a negative electrode including a negative electrode active material; a separator interposed between the positive electrode and the negative electrode; and an electrolyte.

[FIG. 1]

5.0kV 8.6mm x10.0k SE(M)    5.00um

[FIG. 2]

5.0kV 10.5mm x10.0k SE(M)    5.00um

[FIG. 3]

5.0kV 10.1mm x10.0k SE(M)　　　　5.00um

[FIG. 4]

5.0kV 9.9mm x10.0k SE(M)　　　　5.00um

[FIG. 5]

5.0kV 8.7mm x10.0k SE(M)　　　　　5.00um

[FIG. 6]

5.0kV 9.9mm x10.0k SE(M)　　　　　5.00um

[FIG. 7]

5.0kV 9.9mm x10.0k SE(U)    5.00um

# EP 4 769 564 A1

## INTERNATIONAL SEARCH REPORT

| | International application No. |
|---|---|
| | **PCT/KR2024/017317** |

### A. CLASSIFICATION OF SUBJECT MATTER

**H01M 4/525**(2010.01)i; **H01M 4/505**(2010.01)i; **C01G 53/00**(2006.01)i; **H01M 4/131**(2010.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/525(2010.01); C01G 45/12(2006.01); C01G 53/00(2006.01); H01M 10/052(2010.01); H01M 10/0525(2010.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질(cathode material), 리튬 이차 전지(lithium secondary battery), 니켈 (nickel, Ni), 단입자(single particle), 양이온 혼합(cation mixing), 결정 변형(crystal strain), 산화물 전구체(oxide precursor)

### C. DOCUMENTS CONSIDERED TO BE RELEVANT

| Category* | Citation of document, with indication, where appropriate, of the relevant passages | Relevant to claim No. |
|---|---|---|
| Y | KR 10-2023-0098072 A (LG ENERGY SOLUTION, LTD.) 03 July 2023 (2023-07-03)<br>See claim 1; and paragraphs [0047], [0058], [0093], [0095]-[0109], [0111], [0113]-[0116], [0118], [0166]-[0168], [0171], [0174] and [0198]. | 8-13 |
| A | | 1-7,14,15 |
| Y | KR 10-2022-0132533 A (NICHIA CORPORATION) 30 September 2022 (2022-09-30)<br>See claims 1 and 6; and paragraphs [0015], [0024], [0034], [0035], [0041], [0043] and [0097]-[0105]. | 8-13 |
| A | KR 10-2023-0107145 A (LG ENERGY SOLUTION, LTD.) 14 July 2023 (2023-07-14)<br>See abstract; and claims 1-12. | 1-15 |
| A | WO 2012-176471 A1 (KABUSHIKI KAISHA TOYOTA JIDOSHOKKI et al.) 27 December 2012 (2012-12-27)<br>See abstract; claims 14-21; and paragraphs [0030], [0033], [0038] and [0041]. | 1-15 |

[✓] Further documents are listed in the continuation of Box C.   [✓] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 February 2025** | **18 February 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/017317**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2010-0063041 A (MITSUBISHI CHEMICAL CORPORATION) 10 June 2010 (2010-06-10)<br>See abstract; and paragraphs [0052]-[0054], [0327] and [0328]. | 1-15 |

Form PCT/ISA/210 (second sheet) (July 2022)

## INTERNATIONAL SEARCH REPORT
### Information on patent family members

International application No.

**PCT/KR2024/017317**

| Patent document cited in search report | | | Publication date (day/month/year) | Patent family member(s) | | | Publication date (day/month/year) |
|---|---|---|---|---|---|---|---|
| KR | 10-2023-0098072 | A | 03 July 2023 | CN | 118339677 | A | 12 July 2024 |
| | | | | EP | 4425611 | A1 | 04 September 2024 |
| | | | | JP | 2024-546664 | A | 26 December 2024 |
| | | | | KR | 10-2641896 | B1 | 29 February 2024 |
| | | | | US | 2023-0207799 | A1 | 29 June 2023 |
| | | | | WO | 2023-121389 | A1 | 29 June 2023 |
| KR | 10-2022-0132533 | A | 30 September 2022 | CN | 115023832 | A | 06 September 2022 |
| | | | | EP | 4098624 | A1 | 07 December 2022 |
| | | | | EP | 4098624 | A4 | 28 February 2024 |
| | | | | US | 2023-0085645 | A1 | 23 March 2023 |
| | | | | WO | 2021-153546 | A1 | 05 August 2021 |
| KR | 10-2023-0107145 | A | 14 July 2023 | CN | 118511323 | A | 16 August 2024 |
| | | | | EP | 4443563 | A1 | 09 October 2024 |
| | | | | JP | 2024-545475 | A | 06 December 2024 |
| | | | | US | 2023-0223526 | A1 | 13 July 2023 |
| | | | | WO | 2023-132685 | A1 | 13 July 2023 |
| WO | 2012-176471 | A1 | 27 December 2012 | US | 2014-0134491 | A1 | 15 May 2014 |
| | | | | WO | 2012-176471 | A1 | 23 February 2015 |
| KR | 10-2010-0063041 | A | 10 June 2010 | CN | 101796672 | A | 04 August 2010 |
| | | | | CN | 102769130 | A | 07 November 2012 |
| | | | | EP | 2202828 | A1 | 30 June 2010 |
| | | | | EP | 2202828 | A4 | 06 July 2011 |
| | | | | EP | 2202828 | B1 | 11 December 2013 |
| | | | | EP | 2466671 | A2 | 20 June 2012 |
| | | | | EP | 2466671 | A3 | 22 August 2012 |
| | | | | JP | 2009-081130 | A | 16 April 2009 |
| | | | | JP | 2009-289726 | A | 10 December 2009 |
| | | | | JP | 5359140 | B2 | 04 December 2013 |
| | | | | JP | 5428251 | B2 | 26 February 2014 |
| | | | | KR | 10-1562237 | B1 | 21 October 2015 |
| | | | | US | 2010-0209771 | A1 | 19 August 2010 |
| | | | | US | 8962195 | B2 | 24 February 2015 |
| | | | | WO | 2009-031619 | A1 | 12 March 2009 |
| | | | | WO | 2009-031619 | A8 | 19 November 2009 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230154027

- KR 1020240154763